# EUROPEAN PATENT APPLICATION

(11) **EP 4 664 070 A1**
(43) Date of publication of application: **17.12.2025**
(21) Application number: 25171758.3
(22) Date of filing: 22.04.2025
(51) Int. Cl.: G01C 19/5712, G01C 19/574

(54) **DUAL AXIS ANGULAR RATE SENSOR**

(30) Priority: 21.05.2024 US 202418670494
(71) Applicant: NXP USA, Inc., Austin, TX 78735 (US)
(72) Inventor: Soliman, Mostafa, 5656 AG Eindhoven (NL)
(74) Representative: Schmütz, Christian Klaus Johannes

(57) **Abstract**

Embodiments of an angular rate sensor are described, including a MEMS structure having a first set of proof masses arranged in a first two-dimensional array, a second set of proof masses arranged in a second two-dimensional array, and drive actuators, each configured to drive a respective proof mass of the first set of proof masses and a respective proof mass of the second set of proof masses. At least two proof masses of the first set of proof masses are disposed at opposite sides of the second set of proof masses.

## Description

### TECHNICAL FIELD

Embodiments of the subject matter described herein relate generally to microelectromechanical systems (MEMS) devices, such as MEMS angular rate sensors.

### BACKGROUND

Angular rate sensors, such as gyroscopes, sense angular speed or rate about one or more axes. Microelectromechanical systems (MEMS) angular rate sensors manufactured using MEMS technology, which provides a way to make very small mechanical structures and integrate these structures with electrical devices on or over a substrate using conventional batch semiconductor processing techniques. MEMS angular rate sensors are widely used in applications such as automotive systems, inertial guidance systems, gaming systems, smartphones, cameras, and the like.

One approach to angular rate sensing using MEMS devices involves causing (i.e., driving) oscillation of a proof mass along a chosen axis (i.e., "drive axis"). In such a MEMS device, the proof mass is typically coupled to a substrate via a suspension spring system including translatory spring elements and torsion spring elements. When the substrate (including the proof mass) experiences rotation while the proof mass is driven to oscillate along the drive axis, the motion of the proof mass will deviate from the drive axis due to a Coriolis force along an axis (i.e., "sense axis") that is different from that of the drive axis. This deflection of the proof mass can cause changes in the capacitance of an electrical circuit that generates electrical signals indicative of the motion of the proof mass along the sense axis, thereby allowing detection of angular motion of the MEMS device.

### BRIEF DESCRIPTION OF DRAWINGS

A more complete understanding of the subject matter may be derived by referring to the detailed description and claims when considered in conjunction with the following figures, wherein like reference numbers refer to similar elements throughout the figures. Elements in the figures are illustrated for simplicity and clarity and have not necessarily been drawn to scale. The figures along with the detailed description are incorporated and form part of the specification and serve to further illustrate examples, embodiments and the like, and explain various principles and advantages, in accordance with the present disclosure, wherein:
FIG. 1 shows an illustrative block diagram of an electronic device that includes a microelectromechanical system (MEMS) based angular rate sensor, in accordance with various embodiments;
FIG. 2 shows an illustrative top-down view of an angular rate sensor, such as the angular rate sensor of FIG. 1, in accordance with various embodiments;
FIG. 3 shows an illustrative perspective view of the angular rate sensor of FIG. 2 in a first extreme position associated with a drive mode, in accordance with various embodiments;
FIG. 4 shows an illustrative perspective view of the angular rate sensor of FIG. 2 in a second extreme position associated with the drive mode, in accordance with various embodiments;
FIG. 5 shows an illustrative perspective view of the angular rate sensor of FIG. 2 in a first extreme position associated with a first sense mode, in accordance with various embodiments;
FIG. 6 shows an illustrative perspective view of the angular rate sensor of FIG. 2 in a second extreme position associated with the first sense mode, in accordance with various embodiments;
FIG. 7 shows an illustrative perspective view of the angular rate sensor of FIG. 2 in a first extreme position associated with a second sense mode, in accordance with various embodiments; and
FIG. 8 shows an illustrative perspective view of the angular rate sensor of FIG. 2 in a second extreme position associated with the second sense mode, in accordance with various embodiments.

### DETAILED DESCRIPTION

The following detailed description is merely illustrative in nature and is not intended to limit the embodiments of the subject matter or the application and uses of such embodiments. Furthermore, there is no intention to be bound by any expressed or implied theory presented in the preceding technical field, background, or the following detailed description.

For simplicity and clarity of illustration, the drawing figures illustrate the general manner of construction, and descriptions and details of well-known features and techniques may be omitted to avoid unnecessarily obscuring the present disclosure. Additionally, elements in the drawing figures are not necessarily drawn to scale. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. The term "coupled," as used herein, is defined as directly or indirectly connected in an electrical or non-electrical manner. As used herein the terms "substantial" and "substantially" mean sufficient to accomplish the stated purpose in a practical manner and that minor imperfections, if any, are not significant for the stated purpose. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Directional references such as "top," "bottom," "left," "right," "above," "below," and so forth, unless otherwise stated, are not intended to require any preferred orientation and are made with reference to the orientation of the corresponding figure or figures for purposes of illustration.

Various embodiments described herein relate to a microelectromechanical system (MEMS) dual axis angular rate sensor having first and second sets of masses (referred to herein as "proof masses") in respective quad mass gyroscope arrangements for detecting motion about respectively different axes, where each proof mass of the first set shares a drive frame with a corresponding proof mass of the second set. Various common mode rejection mechanisms may be coupled between adj acent proof masses of a given set to constrain or suppress common mode oscillation ("in-phase motion") of adjacent proof masses in various modes for improved accuracy by mitigating or eliminating both linear and angular acceleration effects on the sensor output reading.

Conventional MEMS angular rate sensors typically utilize multiple vibrating structures or masses that are suspended over a substrate. Such MEMS angular rate sensors are often referred to as vibrating structure gyroscopes or Coriolis vibratory gyroscopes. One type of vibrating structure angular rate sensor is a "tuning fork" angular rate sensor having multiple proof masses. In operation, at least some of the proof masses, acting as drive masses, are driven to resonance in opposite directions, also referred to herein as "anti-phase resonance" or "anti-phase motion". In response to an external angular stimulus about a given axis, at least some of the proof masses, acting as sense masses, move in response to a Coriolis acceleration component that represents the angular rotation rate, also referred to in the art as the Coriolis effect. Namely, anti-phase motion of the sense masses in response to the Coriolis effect has an amplitude that is proportional to the angular rate of rotation of the angular rate sensor about the given axis.

A drawback of conventional angular rate sensors is their susceptibility to common mode oscillation of the proof masses in response to linear and/or angular acceleration due to an external stimulus such as shock, vibration, spurious or parasitic acceleration, etc. Common mode oscillation, also referred to herein as in-phase motion, is a condition in which the proof masses, operating as drive masses, sense masses, or both, move in the same direction and at the same amplitude and at a frequency (i.e., the common mode frequency) that is as low as, lower than, or higher than an operating frequency of the angular rate sensor (i.e., the differential mode frequency). Common mode oscillation can lead to inaccuracy or complete failure of the angular rate sensor.

In one or more embodiments, a MEMS dual axis angular rate sensor includes a first set of proof masses (sometimes referred to herein as "z-sense masses" or "outer masses") and a second set of proof masses (sometimes referred to herein as "x-sense masses" or "inner masses"). The x-sense masses and the z-sense masses may be disposed in respective quad mass gyroscope arrangements, with each x-sense mass being coupled to the same drive frame and associated drive actuator (e.g., comb drive) as an associated z-sense mass, and with a respectively different drive actuator and drive frame being provided for each z-sense mass / x-sense mass pair. In a drive mode, the drive actuators may drive oscillation (i.e., oscillatory linear motion) of the x-sense masses and z-sense masses along a first axis (sometimes referred to herein as the "drive axis," or "y-axis").

In a first sense mode (sometimes referred to herein as the "z-sense mode"), oscillation of the z-sense masses along a second axis (sometimes referred to herein as the "x-axis") is caused, due to the Coriolis effect, by rotation of the angular rate sensor about a third axis (sometimes referred to herein as the "z-axis") while the proof masses of the second set are driven by the drive actuators. In a second sense mode (sometimes referred to herein as the "x-sense mode"), oscillation of the x-sense masses along the third axis is caused, due to the Coriolis effect, by rotation of the angular rate sensor about the second axis while the proof masses are driven by the drive actuators. The first, second and third axes may each be orthogonal with respect to one another (i.e., they may be mutually orthogonal).

In each of the drive mode, the first sense mode, and the second sense mode, at least some of the proof masses are driven to resonance in opposite directions, also referred to herein as "anti-phase" driving motion or oscillation. As described herein, common mode rejection mechanisms may be coupled between adjacent proof masses of the same set to suppress in-phase motion while promoting anti-phase motion of the adjacent proof masses. Different common mode rejection mechanisms may be employed to suppress common mode oscillation in different modes (i.e., the drive mode, the first sense mode, and the second sense mode).

In one or more embodiments, the drive frames may be "stiff" (resistant to motion) in the sense directions (along the second and third axes), while allowing motion in along the drive dimension (along the first axis). In this way, the drive frames may provide improved isolation between the x-sense masses and the z-sense masses for advantageously reduced cross-coupling between sense rate channels.

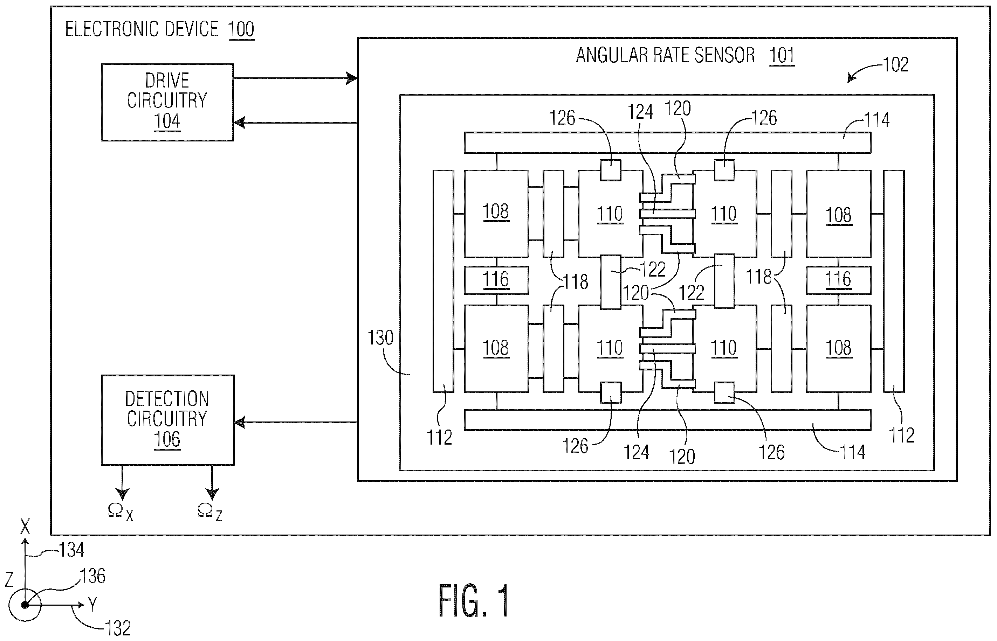

FIG. 1 shows an electronic device 100 that includes an angular rate sensor 101, drive circuitry 104, and detection circuitry 106. The angular rate sensor 101 includes a microelectromechanical system (MEMS) structure 102 disposed on a substrate 130 and sensors (e.g., capacitive sense electrodes; not shown) disposed on or over the substrate 130 and configured to sense (e.g., via changes in capacitance of the capacitive sense electrodes) motion of proof masses of the MEMS structure 102.

The MEMS structure 102 includes a first set of proof masses 108 (sometimes referred to herein as the "z-sense masses 108" or "outer masses 108"), a second set of proof masses 110 (sometimes referred to herein as "x-sense masses 110" or "inner masses 110"), drive actuators 118, and common mode rejection mechanisms 112, 114, 116, 120, 122, 124, and levers 126.

The proof masses 108 are arranged in a 2 x 2 array (e.g., a two-dimensional array including four masses arranged in rows and columns), which may be similar to a quad mass gyroscope arrangement. The proof masses 110 are disposed in 2 x 2 array that is located between (with respect to the x-dimension) the proof masses 108. That is, the 2 x 2 array of the proof masses 110 is disposed between the two columns of the 2 x 2 array of the proof masses 108. The illustrated arrangement is intended to be illustrative and non-limiting. For example, other arrangements, such as an arrangement in which 1 x 2 arrays of proof masses are provided for each sense channel, may instead be used in one or more other embodiments.

The drive circuitry 104 may be configured to impart drive motion via the drive actuators 118, causing oscillation of the proof masses 108 and 110 along a y-axis 132 (sometimes referred to herein as the "y-dimension 132", "drive dimension 132", or "drive axis 132"). For example, the drive circuitry 104 may be configured to provide one or more drive signals (i.e., drive voltages) to the drive actuators 118, where application of the drive signals at the drive actuators 118 creates electrostatic forces that cause motion of the drive actuators 118. The motion of the drive actuators 118, in turn, cause the oscillation of the proof masses 108 and 110. In one or more embodiments, the drive circuitry 104 may be configured to control the drive actuators 118 so as to cause anti-phase motion (e.g., anti-phase oscillation) of groups of proof masses of the proof masses 108 and 110, as described in greater detail below. In one or more embodiments, the drive actuators 118 may include respective comb drives. The drive actuators 118 may be physically coupled to a drive frame (not shown) that is dimensioned to resist motion along the x-axis 134 (sometimes referred to herein as the "x-dimension 134") and a z-axis 136 (sometimes referred to herein as the "z-dimension 136"), and to, comparatively, permit motion along the y-axis 132, where the proof masses 108 and 110 are each coupled a corresponding drive frame. In this way, the drive frames may provide improved isolation between the proof masses 108 and the proof masses 110 in sense modes (described below) of the angular rate sensor 101, which may advantageously reduce cross-coupling between sense rate channels of the angular rates sensor 101.

As shown, the common mode rejection mechanisms 112 and 114 are physically coupled to respective pairs of proof masses of the proof masses 108 and are disposed at outer edges of the MEMS structure 102. The common mode rejection mechanisms 116 are physically coupled between respective pairs of proof masses of the proof masses 108. The common mode rejection mechanisms 120, 122, and 124 are coupled between respective pairs of proof masses of the proof masses 110. The levers 126 are coupled between the substrate 130 and the proof masses 110, and allow motion of the proof masses 110 along both y-axis 132 and the z-axis 136. Rejection of common mode oscillation of the proof masses 108 and 110 by the common mode rejection mechanisms 112, 114, 116, 120, 122, and 124 may advantageously mitigate the impact of linear vibration or shock and angular acceleration on the performance (e.g., detection accuracy) of the angular rate sensor 101.

In one or more embodiments, a "drive mode" of the angular rate sensor 101 corresponds to a mode in which the proof masses 108 and 110 are driven by the drive actuators 118 to oscillate along the y-axis 132 while the angular rate sensor 101 is not rotated about the x-axis 134 or the z-axis 136. In the drive mode, the common mode rejection mechanisms 112, 120, and 122 may be arranged and dimensioned to suppress or otherwise mitigate common mode oscillation of the proof masses 108 and 110 with respect to the y-dimension 132.

A "first sense mode" (sometimes referred to herein as the "z-sense mode") of the angular rate sensor 101 corresponds to a mode in which the proof masses 108 and 110 are driven by the drive actuators 118 while the angular rate sensor 101 is rotated about the z-axis 136, where this combination of motion causes the proof masses 108 to oscillate along the x-axis 134. As shown, the y-axis 132, the x-axis 134, and the z-axis 136 are mutually orthogonal. It should be understood that rotation of the angular rate sensor 101 about a given axis is assumed to be caused by a similar rotation of the electronic device 100 about the given axis, such that detecting rotation of the angular rate sensor 101 effectively detects rotation of the electronic device 100. In the first sense mode, motion of the proof masses 108 along the x-dimension 134 causes changes in capacitance of capacitive sense electrodes coupled to the detection circuitry 106 (as described below), which may determine the angular motion of the angular rate sensor 101 about the z-axis 136 based on the sensed motion of the proof masses 108. In the first sense mode, the common mode rejection mechanisms 114 and 116 may be arranged and dimensioned to suppress or otherwise mitigate common mode oscillation of the proof masses 108 with respect to the x-dimension 134.

A "second sense mode" (sometimes referred to herein as the "x-sense mode") of the angular rate sensor 101 corresponds to a mode in which the proof masses 108 and 110 are driven by the drive actuators 118 while the angular rate sensor 101 is rotated about the x-axis 134, where this combination of motion causes the proof masses 110 to oscillate along the z-axis 136. In the second sense mode, motion of the proof masses 110 along the z-dimension 136 causes changes in capacitance of capacitive sense electrodes coupled to the detection circuitry 106 (as described below), which may determine the angular motion of the angular rate sensor 101 about the x-axis 134 based on the sensed motion of the proof masses 110. In the second sense mode, the common mode rejection mechanisms 120, 122, and 124 may be arranged and dimensioned to suppress or otherwise mitigate common mode oscillation of the proof masses 108 with respect to the z-dimension 136.

The detection circuitry 106 is coupled to capacitive sense electrodes (not shown) of the angular rate sensor 101. For example, the sensors may include capacitive sense electrodes dimensioned and arranged to undergo changes in capacitance in response to motion of individual proof masses of the proof masses 108 and 110. Motion of the proof masses 108 along the x-dimension 134 may cause changes in capacitances of a first set of capacitive sense electrodes of the angular rate sensor 101 that are disposed between each proof mass 108 and the substrate 130. For example, the motion of a given proof mass 108 along the x-dimension 134 (e.g., in the first sense mode) may cause the capacitance of a corresponding capacitive sense electrodes of the first set of capacitive sense electrodes to change. Motion of the proof masses 110 along the z-dimension 136 may cause changes in capacitances of a second set of capacitive sense electrodes of the angular rate sensor 101 that are disposed between each proof mass 108 and the substrate 130. For example, the motion of a given proof mass 110 along the z-dimension 136 (e.g., in the second sense mode) may cause the capacitance of a corresponding capacitive sense electrode of the second set of capacitive sense electrodes to change.

The detection circuitry 106 may measure capacitance of each of the capacitive sense electrodes of the angular rate sensor 101 to detect motion of the proof masses 108 and 110 of the angular rate sensor 101. Based on the measured capacitances, the detection circuitry 106 may generate and output angular rate signals Ω_{X} and Ω_{Z} that are indicative of angular motion of the angular rate sensor 101 about the x-axis 134 and the z-axis 136, respectively. For example, the respective magnitudes of the angular rate signals Ω_{X} and Ω_{Z} may indicate the magnitudes of the angular motion of the angular rate sensor 101 about the x-axis 134 and the z-axis 136, respectively.

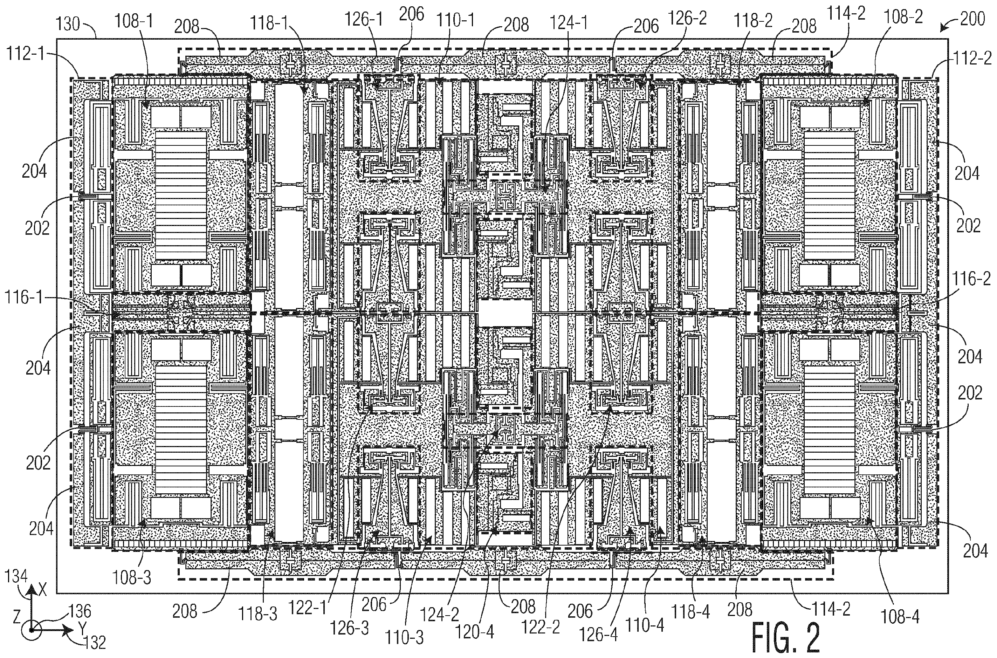

FIG. 2 shows a top-down view of an example embodiment of the MEMS structure 102 in a neutral state (i.e., steady state; not being driven by the drive actuators 118 or in oscillation or resonance). As shown, the MEMS structure 102 may be logically divided into quadrants, with a first quadrant including proof masses 108-1 and 110-1 and a drive actuator 118-1, a second quadrant including proof masses 108-2 and 110-2 and a drive actuator 118-2, a third quadrant including proof masses 108-3 and 110-3 and a drive actuator 118-3, and a fourth quadrant including proof masses 108-4 and 110-4 and a drive actuator 118-4.

The common mode rejection mechanisms 112 may each include three levers 204 coupled to a respective pair of the proof masses 108, with the levers being coupled together via linkages 202. The linkages 202 may be arranged and dimensioned to cause adjacent levers 204 of each common mode rejection mechanism 112 to rotate (i.e., about the z-dimension 136) in opposite directions when the proof masses 108 move along the y-dimension 132 (e.g., in the drive mode), which may facilitate anti-phase motion and suppress common mode oscillation of the proof masses 108 and the proof masses 110 along the y-dimension 132. For example, the common mode rejection mechanism 112-1 is coupled to the proof mass 108-1 and the proof mass 108-3, and the common mode rejection mechanism 112-2 is coupled to the proof mass 108-2 and the proof mass 108-4.

The common mode rejection mechanisms 114 may each include three levers 208 coupled to a respective pair of the proof masses 108, with the levers being coupled together via linkages 206. The linkages 206 may be arranged and dimensioned to cause adjacent levers 208 of each common mode rejection mechanism 114 to rotate (i.e., about the z-dimension 136) in opposite directions when the proof masses 108 move along the x-dimension 134 (e.g., in the first sense mode), which may facilitate anti-phase motion and suppress common mode oscillation of the proof masses 108 along the x-dimension 134. For example, the common mode rejection mechanism 114-1 is coupled to the proof mass 108-1 and the proof mass 108-2, and the common mode rejection mechanism 114-2 is coupled to the proof mass 108-3 and the proof mass 108-4.

The common mode rejection mechanisms 116 may each be coupled between a respective pair of the proof masses 108, and may be arranged and dimensioned to facilitate anti-phase motion and suppress common mode oscillation along the x-dimension 134. For example, the common mode rejection mechanism 116-1 is coupled between the proof mass 108-1 and the proof mass 108-3, and the common mode rejection mechanism 116-2 is coupled to the proof mass 108-2 and the proof mass 108-4.

The common mode rejection mechanisms 120 may each be coupled between a respective pair of the proof masses 110, and may be arranged and dimensioned to facilitate anti-phase motion and suppress common mode oscillation along the y-dimension 132 in the drive mode and along the z-dimension 136 in the second sense mode. Each of the common mode rejection mechanisms 120 may be anchored to the substrate 130. For example, the common mode rejection mechanism 120-1 is coupled between the proof mass 110-1 and the proof mass 110-2 at a first side of the common mode rejection mechanism 124-1, the common mode rejection mechanism 120-2 is coupled to the proof mass 110-1 and the proof mass 110-2 at a second side of the common mode rejection mechanism 124-1, the common mode rejection mechanism 120-3 is coupled between the proof mass 110-3 and the proof mass 110-4 at a first side of the common mode rejection mechanism 124-2, and the common mode rejection mechanism 120-4 is coupled between the proof mass 110-3 and the proof mass 110-4 at a second side of the common mode rejection mechanism 124-2.

The common mode rejection mechanisms 122 may each be coupled between a respective pair of the proof masses 110, and may be arranged and dimensioned to facilitate anti-phase motion and suppress common mode oscillation along the y-dimension 132 in the drive mode and along the z-dimension 136 in the second sense mode. Each of the common mode rejection mechanisms 122 may be anchored to the substrate 130. Each of the common mode rejection mechanisms 122 may include a lever that connects the corresponding pair of proof masses of the proof masses 110. For example, the common mode rejection mechanism 122-1 is coupled between the proof mass 110-1 and the proof mass 110-3, and the common mode rejection mechanism 122-2 is coupled between the proof mass 110-2 and the proof mass 110-4.

The common mode rejection mechanisms 124 may each be coupled between a respective pair of the proof masses 110, and may be arranged and dimensioned to facilitate anti-phase motion and suppress common mode oscillation along the along the z-dimension 136 in the second sense mode. Each of the common mode rejection mechanisms 124 may be anchored to the substrate 130. Each of the common mode rejection mechanisms 124 may include a lever that connects the corresponding pair of proof masses of the proof masses 110. For example, the common mode rejection mechanism 124-1 is coupled between the proof mass 110-1 and the proof mass 110-2, and the common mode rejection mechanism 124-2 is coupled between the proof mass 110-3 and the proof mass 110-4.

Each of the levers 126 may be coupled to a respective proof mass of the proof masses 110. Each of the levers 126 may be anchored to the substrate 130. Each of the levers 126 may facilitate motion of the corresponding proof mass 110 along the z-dimension 136 (e.g., in the second sense mode) and the drive direction y-dimension 132. For example, the lever 126-1 is coupled to the proof mass 110-1, the lever 126-2 is coupled to the proof mass 110-2, the lever 126-3 is coupled to the proof mass 110-3, and the lever 126-3 is coupled to the proof mass 110-4.

In the present example, each of the drive actuators 118 is coupled between corresponding proof masses of the proof masses 108 and 110 in each quadrant. For example, the drive actuator 118-1 is coupled between the proof mass 108-1 and the proof mass 110-1 in the first quadrant, the drive actuator 118-2 is coupled between the proof mass 108-2 and the proof mass 110-2 in the second quadrant, the drive actuator 118-3 is coupled between the proof mass 108-3 and the proof mass 110-3 in the third quadrant, and the drive actuator 118-4 is coupled between the proof mass 108-4 and the proof mass 110-4 in the fourth quadrant.

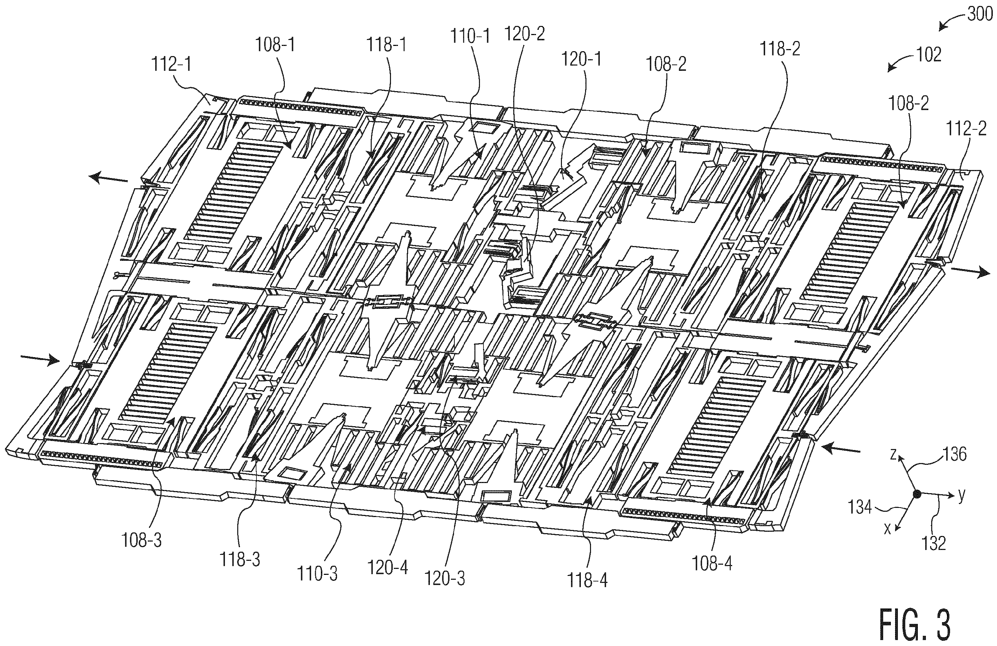

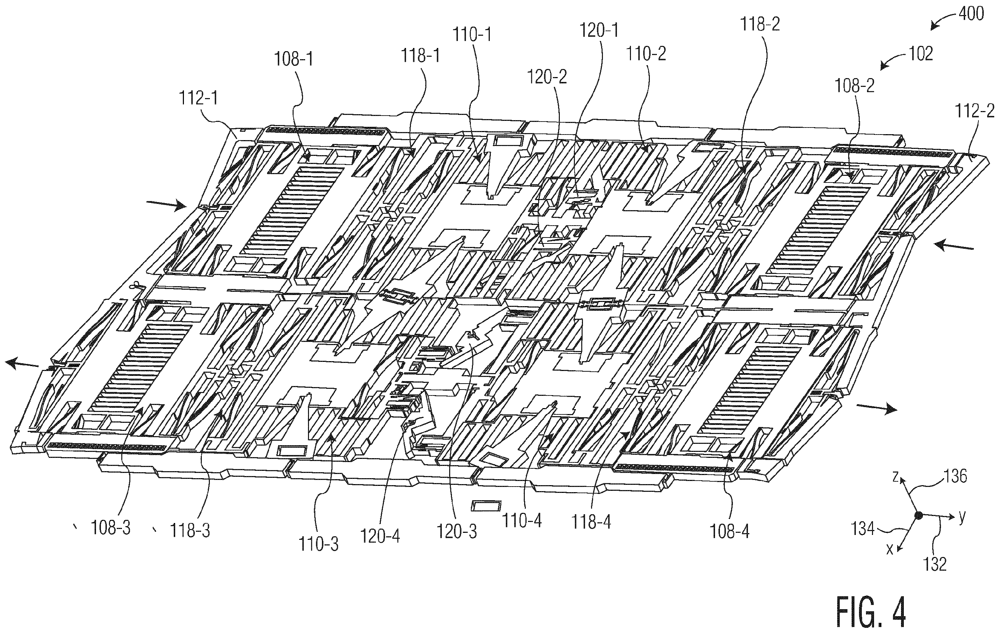

Examples of two extreme positions between which the proof masses 108 and 110 of the MEMS structure 102 may oscillate in the drive mode are shown in FIGS. 3 and 4.

FIG. 3 shows a perspective view 300 of the MEMS structure 102 of FIGS. 1 and 2 in the first extreme position of the drive mode. As shown, in the first extreme position of the drive mode, each of the proof masses 108-1, 108-4, 110-1, and 110-4 and the drive actuators 118-1 and 118-4 are shifted in the negative y direction, while the proof masses 108-2, 108-3, 110-2, and 110-3 and the drive actuators 118-2 and 118-3 are shifted in the positive y direction, relative to the positions of these proof masses and drive actuators in the neutral state of the MEMS structure 102 (shown in FIG. 2). The common mode rejection mechanisms 120-1 and 120-2 are expanded in the y-dimension 132 and the common mode rejection mechanism 120-3 and 120-4 are contracted in the y-dimension 132 to facilitate anti-phase motion of the proof masses 108 and 110. The levers of the common mode rejection mechanisms 112 and 120 are rotated to facilitate anti-phase motion of the proof masses 108 and 110.

FIG. 4 shows a perspective view 400 of the MEMS structure 102 of FIGS. 1 and 2 in the second extreme position of the drive mode. As shown, in the second extreme position of the drive mode, each of the proof masses 108-1, 108-4, 110-1, and 110-4 and the drive actuators 118-1 and 118-4 are shifted in the positive y direction, while the proof masses 108-2, 108-3, 110-2, and 110-3 and the drive actuators 118-2 and 118-3 are shifted in the negative y direction, relative to the positions of these proof masses and drive actuators in the neutral state of the MEMS structure 102 (shown in FIG. 2). The common mode rejection mechanisms 120-1 and 120-2 are contracted in the y-dimension 132 and the common mode rejection mechanism 120-3 and 120-4 are expanded in the y-dimension 132 to facilitate anti-phase motion of the proof masses 108 and 110. The levers of the common mode rejection mechanisms 112 and 120 are rotated to facilitate anti-phase motion of the proof masses 108 and 110.

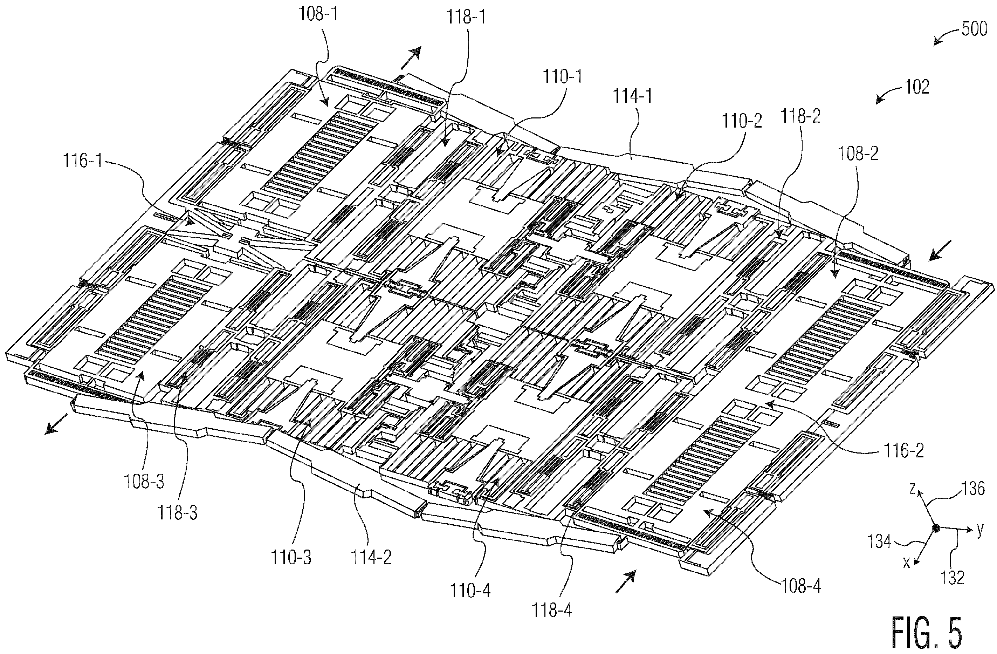

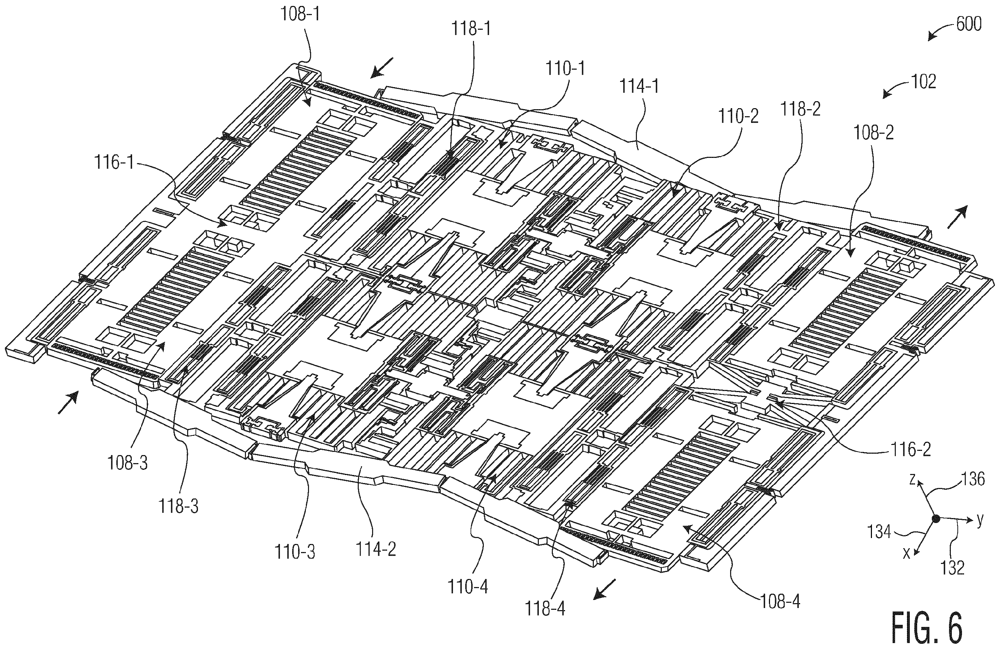

Examples of two extreme positions between which the proof masses 108 of the MEMS structure 102 may oscillate in the first sense mode are shown in FIGS. 5 and 6.

FIG. 5 shows a perspective view 500 of the MEMS structure 102 of FIGS. 1 and 2 in the first extreme position of the first sense mode (i.e., the z-sense mode). As shown, in the first extreme position of the first sense mode, each of the proof masses 108-1 and 108-4 are shifted in the positive x direction, while the proof masses 108-2 and 108-3 are shifted in the negative x direction, relative to the positions of these proof masses in the neutral state of the MEMS structure 102 (shown in FIG. 2). The common mode rejection mechanisms 116-1 is expanded in the x-dimension 134 and the common mode rejection mechanism 116-2 is contracted in the x-dimension 134 to facilitate anti-phase motion of the proof masses 108. The levers of the common mode rejection mechanisms 114 are rotated to facilitate anti-phase motion of the proof masses 108.

FIG. 6 shows a perspective view 600 of the MEMS structure 102 of FIGS. 1 and 2 in the second extreme position of the first sense mode (i.e., the z-sense mode). As shown, in the second extreme position of the first sense mode, each of the proof masses 108-1 and 108-4 are shifted in the negative x direction, while the proof masses 108-2 and 108-3 are shifted in the positive x direction, relative to the positions of these proof masses in the neutral state of the MEMS structure 102 (shown in FIG. 2). The common mode rejection mechanisms 116-1 is contracted in the x-dimension 134 and the common mode rejection mechanism 116-2 is expanded in the x-dimension 134 to facilitate anti-phase motion of the proof masses 108. The levers of the common mode rejection mechanisms 114 are rotated to facilitate anti-phase motion of the proof masses 108.

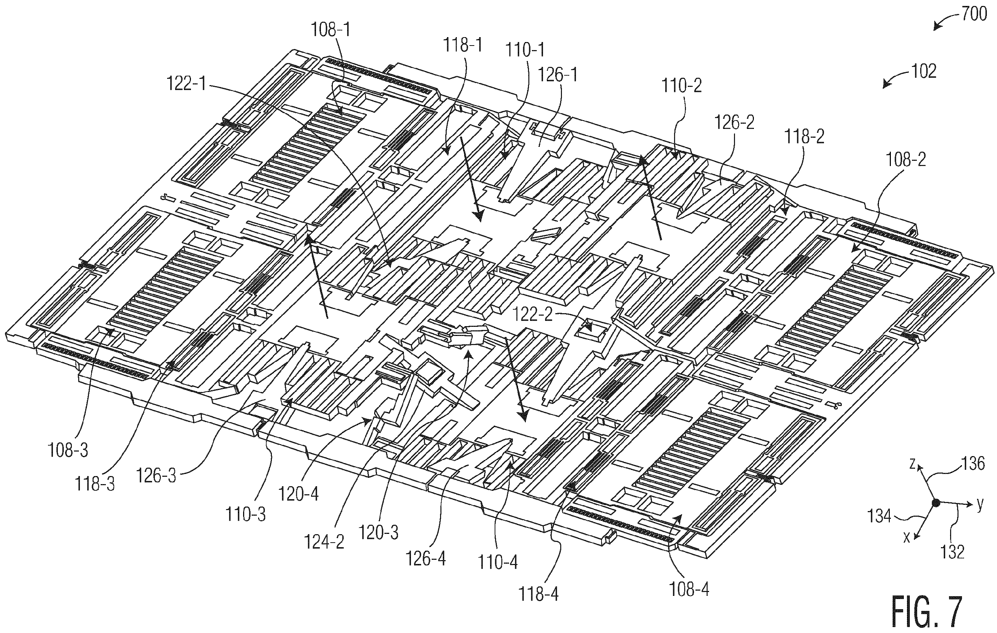

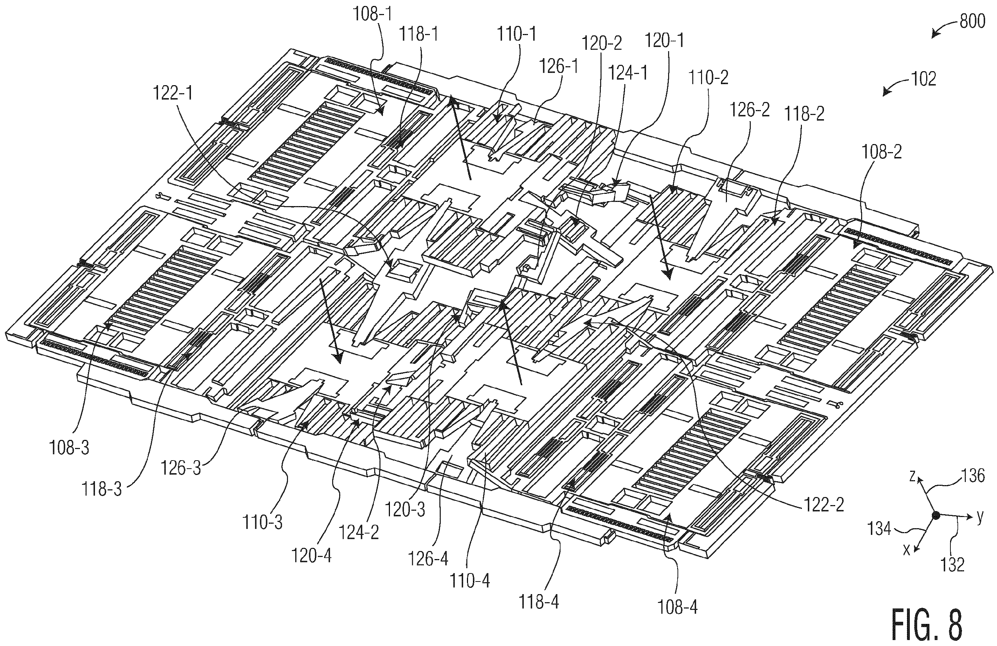

Examples of two extreme positions between which the proof masses 110 of the MEMS structure 102 may oscillate in the first sense mode are shown in FIGS. 7 and 8.

FIG. 7 shows a perspective view 700 of the MEMS structure 102 of FIGS. 1 and 2 in the first extreme position of the second sense mode (i.e., the x-sense mode). As shown, in the first extreme position of the second sense mode, each of the proof masses 110-1 and 110-4 are shifted in the negative z direction, while the proof masses 110-2 and 110-3 are shifted in the positive z direction, relative to the positions of these proof masses in the neutral state of the MEMS structure 102 (shown in FIG. 2). The common mode rejection mechanisms 120 are rotated about the y-dimension 132, the common mode rejection mechanisms 122 are rotated about the y-dimension 132, and the common mode rejection mechanisms 124 are rotated about the x-dimension 134 to facilitate anti-phase motion of the proof masses 108.

FIG. 8 shows a perspective view 800 of the MEMS structure 102 of FIGS. 1 and 2 in the second extreme position of the second sense mode (i.e., the x-sense mode). As shown, in the second extreme position of the second sense mode, each of the proof masses 110-1 and 110-4 are shifted in the positive z direction, while the proof masses 110-2 and 110-3 are shifted in the negative z direction, relative to the positions of these proof masses in the neutral state of the MEMS structure 102 (shown in FIG. 2). The common mode rejection mechanisms 120 are rotated about the y-dimension 132, the common mode rejection mechanisms 122 are rotated about the y-dimension 132, and the common mode rejection mechanisms 124 are rotated about the x-dimension 134 to facilitate anti-phase motion of the proof masses 108.

In an example embodiment, an angular rate sensor includes a microelectromechanical system (MEMS) structure having a first set of proof masses arranged in a first two-dimensional array, a second set of proof masses arranged in a second two-dimensional array, and drive actuators. Proof masses of the first set of proof masses are disposed at opposite sides of the second set of proof masses. Each of the drive actuators is coupled between and configured to drive a respective proof mass of the first set of proof masses and a respective proof mass of the second set of proof masses.

In one or more embodiments, the angular rate sensor further includes a first set of common mode rejection mechanisms each coupled to at least two proof masses of the first set of proof masses, where the common mode rejection mechanisms of the first set of common mode rejection mechanisms are configured to suppress common mode oscillation of the first set of proof masses in at least one dimension, and a second set of common mode rejection mechanisms each coupled to at least two proof masses of the second set of proof masses, where the common mode rejection mechanisms of the second set of common mode rejection mechanisms are configured to suppress common mode oscillation of the second set of proof masses in at least one dimension.

In one or more embodiments, the first set of common mode rejection mechanisms includes a first common mode rejection mechanism coupled to first and second proof masses of the first set of proof masses, a second common mode rejection mechanism coupled to third and fourth proof masses of the first set of proof masses, a third common mode rejection mechanism coupled to the second proof mass and the fourth proof mass, and a fourth common mode rejection mechanism coupled to the first proof mass and the third proof mass.

In one or more embodiments, the second set of common mode rejection mechanisms includes a fifth common mode rejection mechanism coupled between fifth and sixth proof masses of the second set of proof masses, a sixth common mode rejection mechanism coupled between seventh and eighth proof masses of the second set of proof masses, a seventh common mode rejection mechanism coupled between the sixth proof mass and the eighth proof mass, and an eighth common mode rejection mechanism coupled between the fifth proof mass and the seventh proof mass.

In one or more embodiments, the drive actuators include first, second, third, and fourth drive actuators, the MEMS structure includes first, second, third, and fourth quadrants, the first quadrant includes the first proof mass, the fifth proof mass, and the first drive actuator, the second quadrant includes the second proof mass, the sixth proof mass, and the second drive actuator, the third quadrant includes the third proof mass, the seventh proof mass, and the third drive actuator, and the fourth quadrant includes the fourth proof mass, the eighth proof mass, and the fourth drive actuator.

In one or more embodiments, the first drive actuator is coupled between the first proof mass and the fifth proof mass, the second drive actuator is coupled between the second proof mass and the sixth proof mass, the third drive actuator is coupled between the third proof mass and the seventh proof mass, and the fourth drive actuator is coupled between the fourth proof mass and the eighth proof mass.

In one or more embodiments, in a drive mode, the drive actuators are configured to drive the first and second sets of proof masses, causing anti-phase oscillation of the first and second sets of proof masses along a first dimension.

In one or more embodiments, in a first sense mode, driving motion of the drive actuators in combination with rotation of the angular rate sensor about a third dimension that is orthogonal to the first dimension causes anti-phase oscillation of the first set of proof masses along a second dimension, and the first dimension, the second dimension, and the third dimension are mutually orthogonal.

In one or more embodiments, in a second sense mode, driving motion of the drive actuators in combination with rotation of the angular rate sensor about the second dimension causes anti-phase oscillation of the second set of proof masses along the third dimension.

In one or more embodiments, the angular rate sensor further includes detection circuitry configured to generate a first signal indicating a first magnitude of angular motion of the angular rate sensor about the third dimension in response to detected motion of the first set of proof masses in the second dimension, and to generate a second signal indicating a second magnitude of angular motion of the angular rate sensor about the second dimension in response to detected motion of the second set of proof masses in the third dimension.

In an example embodiment, a microelectromechanical system (MEMS) structure includes a first set of proof masses including four proof masses arranged in one or more rows and one or more columns, a second set of proof masses disposed between columns of the first set of proof masses, and drive actuators. Each of the drive actuators is coupled between and configured to drive a respective proof mass of the first set of proof masses and a respective proof mass of the second set of proof masses. A drive frame is coupled to the drive actuators and is at least partially disposed between at least one proof mass of the first set of proof masses and at least one proof mass of the second set of proof masses.

In one or more embodiments, the MEMS structure further includes a first set of common mode rejection mechanisms each coupled to at least two proof masses of the first set of proof masses, where the common mode rejection mechanisms of the first set of common mode rejection mechanisms are configured to suppress common mode oscillation of the first set of proof masses in at least one dimension, and a second set of common mode rejection mechanisms each coupled to at least two proof masses of the second set of proof masses, where the common mode rejection mechanisms of the second set of common mode rejection mechanisms are configured to suppress common mode oscillation of the second set of proof masses in at least one dimension.

In one or more embodiments, the first set of common mode rejection mechanisms includes a first common mode rejection mechanism coupled to first and second proof masses of the first set of proof masses, a second common mode rejection mechanism coupled to third and fourth proof masses of the first set of proof masses, a third common mode rejection mechanism coupled to the second proof mass and the fourth proof mass, and a fourth common mode rejection mechanism coupled to the first proof mass and the third proof mass.

In one or more embodiments, the second set of common mode rejection mechanisms includes a fifth common mode rejection mechanism coupled between fifth and sixth proof masses of the second set of proof masses, a sixth common mode rejection mechanism coupled between seventh and eighth proof masses of the second set of proof masses, a seventh common mode rejection mechanism coupled between the sixth proof mass and the eighth proof mass, and an eighth common mode rejection mechanism coupled between the fifth proof mass and the seventh proof mass.

In one or more embodiments, the drive actuators include first, second, third, and fourth drive actuators, the MEMS structure includes first, second, third, and fourth quadrants, the first quadrant includes the first proof mass, the fifth proof mass, and the first drive actuator, the second quadrant includes the second proof mass, the sixth proof mass, and the second drive actuator, the third quadrant includes the third proof mass, the seventh proof mass, and the third drive actuator, and the fourth quadrant includes the fourth proof mass, the eighth proof mass, and the fourth drive actuator.

In one or more embodiments, the first drive actuator is coupled between the first proof mass and the fifth proof mass, the second drive actuator is coupled between the second proof mass and the sixth proof mass, the third drive actuator is coupled between the third proof mass and the seventh proof mass, and the fourth drive actuator is coupled between the fourth proof mass and the eighth proof mass.

In one or more embodiments, in a drive mode, the drive actuators are configured to drive the first and second sets of proof masses, causing anti-phase oscillation of the first and second sets of proof masses along a first dimension.

In one or more embodiments, in a first sense mode, driving motion of the drive actuators in combination with rotation of the MEMS structure about a third dimension that is orthogonal to the first dimension causes anti-phase oscillation of the first set of proof masses along a second dimension, the first dimension, the second dimension, and the third dimension are mutually orthogonal. In a second sense mode, driving motion of the drive actuators in combination with rotation of the MEMS structure about the second dimension causes anti-phase oscillation of the second set of proof masses along the third dimension.

In one or more embodiments, at least one common mode rejection mechanisms of the first set of common mode rejection mechanisms includes at least a first lever and a second lever, the first lever is coupled to the second lever via a linkage, the first lever is connected to a first proof mass of the first set of proof masses, and the second lever is connected to a second proof mass of the first set of proof masses.

In one or more embodiments, at least one common mode rejection mechanism of the second set of common mode rejection mechanisms is configured to suppress common mode oscillation of the second set of proof masses in two dimensions.

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with) another element, and not necessarily mechanically. Thus, although the schematic shown in the figures depict one exemplary arrangement of elements, additional intervening elements, devices, features, or components may be present in one or more embodiments of the depicted subject matter.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the method(s) described herein may be implemented using software instructions stored on a computer useable storage medium for execution by a computer. As an example, an embodiment of a computer program product includes a computer useable storage medium to store a computer readable program. The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments herein may be implemented entirely in hardware or in an implementation containing both hardware and software elements. In embodiments which use software, the software may include but is not limited to firmware, resident software, microcode, or other suitable software.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. An angular rate sensor comprising:
a microelectromechanical system (MEMS) structure comprising:
a first set of proof masses arranged in a first two-dimensional array;
a second set of proof masses arranged in a second two-dimensional array, wherein proof masses of the first set of proof masses are disposed at opposite sides of the second set of proof masses; and
drive actuators, wherein each of the drive actuators is coupled between and configured to drive a respective proof mass of the first set of proof masses and a respective proof mass of the second set of proof masses.

2. The angular rate sensor of claim 1, further comprising:
a first set of common mode rejection mechanisms each coupled to at least two proof masses of the first set of proof masses, wherein the common mode rejection mechanisms of the first set of common mode rejection mechanisms are configured to suppress common mode oscillation of the first set of proof masses in at least one dimension; and
a second set of common mode rejection mechanisms each coupled to at least two proof masses of the second set of proof masses, wherein the common mode rejection mechanisms of the second set of common mode rejection mechanisms are configured to suppress common mode oscillation of the second set of proof masses in at least one dimension.

3. The angular rate sensor of claim 1 or 2, wherein the first set of common mode rejection mechanisms comprises:
a first common mode rejection mechanism coupled to first and second proof masses of the first set of proof masses;
a second common mode rejection mechanism coupled to third and fourth proof masses of the first set of proof masses;
a third common mode rejection mechanism coupled to the second proof mass and the fourth proof mass; and
a fourth common mode rejection mechanism coupled to the first proof mass and the third proof mass.

4. The angular rate sensor of any of claims 1 to 3, wherein the second set of common mode rejection mechanisms comprises:
a fifth common mode rejection mechanism coupled between fifth and sixth proof masses of the second set of proof masses;
a sixth common mode rejection mechanism coupled between seventh and eighth proof masses of the second set of proof masses;
a seventh common mode rejection mechanism coupled between the sixth proof mass and the eighth proof mass; and
an eighth common mode rejection mechanism coupled between the fifth proof mass and the seventh proof mass.

5. The angular rate sensor of claim 4, if dependent on claim 3, wherein:
the drive actuators include first, second, third, and fourth drive actuators,
the MEMS structure includes first, second, third, and fourth quadrants,
the first quadrant includes the first proof mass, the fifth proof mass, and the first drive actuator,
the second quadrant includes the second proof mass, the sixth proof mass, and the second drive actuator,
the third quadrant includes the third proof mass, the seventh proof mass, and the third drive actuator, and
the fourth quadrant includes the fourth proof mass, the eighth proof mass, and the fourth drive actuator.

6. The angular rate sensor of claim 5, wherein:
the first drive actuator is coupled between the first proof mass and the fifth proof mass,
the second drive actuator is coupled between the second proof mass and the sixth proof mass,
the third drive actuator is coupled between the third proof mass and the seventh proof mass, and
the fourth drive actuator is coupled between the fourth proof mass and the eighth proof mass.

7. The angular rate sensor any of claims 2 to 6, if dependent on claim 2, wherein, in a drive mode, the drive actuators are configured to drive the first and second sets of proof masses, causing anti-phase oscillation of the first and second sets of proof masses along a first dimension.

8. The angular rate sensor of claim 7, wherein, in a first sense mode, driving motion of the drive actuators in combination with rotation of the angular rate sensor about a third dimension that is orthogonal to the first dimension causes anti-phase oscillation of the first set of proof masses along a second dimension, and wherein the first dimension, the second dimension, and the third dimension are mutually orthogonal.

9. The angular rate sensor of claim 8, wherein, in a second sense mode, driving motion of the drive actuators in combination with rotation of the angular rate sensor about the second dimension causes anti-phase oscillation of the second set of proof masses along the third dimension.

10. The angular rate sensor of claim 8 or 9, further comprising:
detection circuitry configured to generate a first signal indicating a first magnitude of angular motion of the angular rate sensor about the third dimension in response to detected motion of the first set of proof masses in the second dimension, and to generate a second signal indicating a second magnitude of angular motion of the angular rate sensor about the second dimension in response to detected motion of the second set of proof masses in the third dimension.

11. A microelectromechanical system (MEMS) structure comprising:
a first set of proof masses including four proof masses arranged in one or more rows and one or more columns;
a second set of proof masses, wherein proof masses of the second set are disposed between columns of the first set of proof masses; and
drive actuators, wherein each of the drive actuators is coupled between and configured to drive a respective proof mass of the first set of proof masses and a respective proof mass of the second set of proof masses, wherein a drive frame is coupled to the drive actuators and is at least partially disposed between at least one proof mass of the first set of proof masses and at least one proof mass of the second set of proof masses.

12. The MEMS structure of claim 11, further comprising:
a first set of common mode rejection mechanisms each coupled to at least two proof masses of the first set of proof masses, wherein the common mode rejection mechanisms of the first set of common mode rejection mechanisms are configured to suppress common mode oscillation of the first set of proof masses in at least one dimension; and
a second set of common mode rejection mechanisms each coupled to at least two proof masses of the second set of proof masses, wherein the common mode rejection mechanisms of the second set of common mode rejection mechanisms are configured to suppress common mode oscillation of the second set of proof masses in at least one dimension.

13. The MEMS structure of claim 11 or 12, wherein the first set of common mode rejection mechanisms comprises:
a first common mode rejection mechanism coupled to first and second proof masses of the first set of proof masses;
a second common mode rejection mechanism coupled to third and fourth proof masses of the first set of proof masses;
a third common mode rejection mechanism coupled to the second proof mass and the fourth proof mass; and
a fourth common mode rejection mechanism coupled to the first proof mass and the third proof mass.

14. The MEMS structure of any of claims 11 to 13, wherein the second set of common mode rejection mechanisms comprises:
a fifth common mode rejection mechanism coupled between fifth and sixth proof masses of the second set of proof masses;
a sixth common mode rejection mechanism coupled between seventh and eighth proof masses of the second set of proof masses;
a seventh common mode rejection mechanism coupled between the sixth proof mass and the eighth proof mass; and
an eighth common mode rejection mechanism coupled between the fifth proof mass and the seventh proof mass.

15. The MEMS structure of claim 14, wherein:
the drive actuators include first, second, third, and fourth drive actuators,
the MEMS structure includes first, second, third, and fourth quadrants,
the first quadrant includes the first proof mass, the fifth proof mass, and the first drive actuator,
the second quadrant includes the second proof mass, the sixth proof mass, and the second drive actuator,
the third quadrant includes the third proof mass, the seventh proof mass, and the third drive actuator, and
the fourth quadrant includes the fourth proof mass, the eighth proof mass, and the fourth drive actuator.
